# EUROPÄISCHE PATENTSCHRIFT

(11) **EP 4 077 066 B1**
(45) Veröffentlichungstag und Bekanntmachung des Hinweises auf die Patenterteilung: **07.02.2024**
(21) Anmeldenummer: 20824901.1
(22) Anmeldetag: 08.12.2020
(51) Int. Cl.: B60R 21/26, B60R 21/264, F42B 3/04, F42B 3/103

(54) **GASGENERATOR INSBESONDERE FÜR EIN FAHRZEUGSICHERHEITSSYSTEM**
GAS GENERATOR, IN PARTICULAR FOR A VEHICLE SAFETY SYSTEM
GÉNÉRATEUR DE GAZ, EN PARTICULIER POUR UN SYSTÈME DE SÉCURITÉ DE VÉHICULE

(30) Priorität: 18.12.2019 DE 102019134899
(43) Veröffentlichungstag der Anmeldung: 26.10.2022
(73) Patentinhaber: ZF Airbag Germany GmbH, 84544 Aschau a. Inn (DE)
(72) Erfinder: WEBER, Bernd, 84513 Erharting (DE)
(74) Vertreter: ZF Patentabteilung - DIPS
(86) Internationale Anmeldenummer: PCT/EP2020/085024
(87) Internationale Veröffentlichungsnummer: WO 2021/122142

(56) Entgegenhaltungen:
- EP-A2- 0 943 503
- DE-A1- 10 236 508
- DE-A1-102009 013 603
- DE-A1-102017 128 886
- US-A1- 2004 226 472
- US-A1- 2012 079 959

## Beschreibung

Die Erfindung betrifft einen Gasgenerator, für ein Fahrzeugsicherheitssystem, gemäß dem Oberbegriff des Patentanspruchs 1. Ferner befasst sich die Erfindung mit einem Gassackmodul mit einem solchen Gasgenerator und mit einem Fahrzeugsicherheitssystem mit einem solchen Gasgenerator.

Gasgeneratoren liefern beispielsweise Gas zum Füllen eines Gassacks, oder für den Antrieb eines Gurtstraffers eines Sicherheitsgurtsystems oder für ein Aktuatorbauteil.

Die Schrift WO 2010/037516 offenbart einen Gasgenerator, insbesondere für ein Fahrzeugsicherheitssystem, mit einer Anzündeinheit, umfassend ein Halteelement, einen Anzünder und einen Sockel, wobei der Sockel durch eine einzige Kunststoffeinspritzung gebildet ist, derart dass der Anzünder in den Sockel eingebettet und der Sockel an das Halteelement angespritzt ist.

An einer derartigen Konstruktion ist von Nachteil, dass für eine Abdichtung bzw. Dichtheit des Gasgenerators gegenüber Umwelteinflüssen aus der Umgebung des Gasgenerators aufwändige und komplexe Maßnahme ergriffen werden müssen, indem ein Dichtmittel in flüssiger bzw. pastöser Form von außen her, also von der Umgebung des Gasgenerators her, in einem Bereich einer äußeren Öffnung des Haltelements aufgebracht und ausgehärtet werden muss. Ein entsprechendes Hantieren bei der Montage eines derartig bekannten Gasgenerators ist zeit- und kostenaufwändig. Hinzu kommt noch, dass dabei das Dichtmittel nicht an einem einzigen Bauteil bzw. Element des Gasgenerators, sondern zwischen dem Halteelement und dem Sockel aufgebracht wird. Da Halteelement und Sockel aus unterschiedlichen Materialien sind, schränkt dies die Auswahl und Art und Weise der Anbringung des Dichtelements ein, um eine gut anhaftende Dichtung zwischen beiden Bauteilen zu gewährleisten.

Die Schrift DE 10 2017 128 886 A1 zeigt eine Konstruktion eines Gasgenerators, bei der ein Anzünder in einen trapezförmiges Kunststoffteil eingebettet ist und mit diesem zusammen eine bekannte vorgefertigte Anzünder-Baueinheit bildet, welche in ein Halteteil eingesetzt, jedoch durch eine mechanische Fixierung, nämlich eine Einbördelung, gehaltert ist.

Die Schrift US 2012079959 A1 offenbart einen Gasgenerator nach dem Oberbegriff des Anspruchs 1, für ein Fahrzeugsicherheitssystem, mit einer Anzündeinheit, umfassend ein Halteelement, einen Anzünder und einen Sockel, wobei der Sockel durch eine einzige Kunststoffeinspritzung gebildet ist, derart dass der Anzünder in den Sockel eingebettet und der Sockel an das Halteelement angespritzt ist, wobei eine Membran vorgesehen ist, welche eine innere erste Öffnung des Halteelements verschließt, wobei das Halteelement als langgestreckter, hülsenförmiger Hohlkörper mit der ersten Öffnung, die im Inneren des Gasgenerators liegt, und einer dazu stirnseitig gegenüberliegenden zweiten Öffnung ausgebildet ist, wobei das Halteelement und die Membran aus Metall gebildet sind.

An einer derartigen Konstruktion ist von Nachteil, dass man in dem Fall einer Anzündeinheit, die als eine vormontierte Baugruppe ausgebildet ist, beispielsweise umfassend den Anzünder, Sockel und das Halteelement, den sensiblen Anzünder nicht gut genug vor einer Beschädigung, beispielsweise bei einer Hantierung einer solchen Baugruppe in einem Wendelförderer an einer Montagelinie für den Gasgenerator, schützen könnte. Zum anderen besteht hier der Nachteil, dass ein im Innenbereich des Gasgenerators positionierter Treibstoff nicht ausreichend genug vor einem negativen Einfluss, insbesondere Feuchte, aus der Umgebung des Gasgenerators geschützt wäre.

Vor diesem Hintergrund ist es Aufgabe der vorliegenden Erfindung, zumindest einen der vorgenannten Nachteile zu eliminieren bzw. abzuschwächen. Insbesondere soll dabei die Erfindung einen Gasgenerator angeben, der einfach zu konstruieren ist und möglichst dicht gegenüber Umwelteinflüssen ausgebildet ist.

Ferner ist es Aufgabe der Erfindung ein weiterentwickeltes Gassackmodul und ein Fahrzeugsicherheitssystem anzugeben.

Erfindungsgemäß wird diese Aufgabe im Hinblick auf den Gasgenerator durch den Gegenstand des Patentanspruches 1, im Hinblick auf das Gassackmodul durch den Gegenstand des Patentanspruches 14 und im Hinblick auf das Fahrzeugsicherheitssystem durch den Gegenstand des Patentanspruches 15 gelöst.

Der erfindungsgemäße Gasgenerator weist eine Anzündeinheit auf, die ein Halteelement, einen Anzünder und einen Sockel umfasst, wobei der Sockel durch eine einzige Kunststoffeinspritzung gebildet ist, derart dass der Anzünder in den Sockel eingebettet und der Sockel an das Halteelement angespritzt ist, wobei eine Membran vorgesehen ist, welche eine innere erste Öffnung des Halteelements hermetisch verschließt, wobei das Halteelement als langgestreckter, hülsenförmiger Hohlkörper mit der ersten Öffnung, die im Inneren des Gasgenerators liegt, und einer dazu stirnseitig gegenüberliegenden zweiten Öffnung ausgebildet ist, wobei das Halteelement und die Membran aus Metall gebildet sind, und wobei das Halteelement im Bereich seiner ersten Öffnung einen ersten Fortsatz hat, welcher den Anzünder bezüglich seiner Längserstreckung überragt, wobei die Membran als eine planare Scheibe ausgebildet ist und mit dem Halteelement stoffschlüssig durch eine erste Verbindung verbunden ist, derart, dass die Membran die innere erste Öffnung des Halteelements wasserdicht und gasdicht verschließt.. Im Sinne der vorliegenden Erfindung ist zum einen mit dem Begriff "innere" erste Öffnung des Halteelements gemeint, dass es sich damit um eine innerhalb bzw. im Innenbereich des Gasgenerators liegende Öffnung handelt. Anders ausgedrückt liegt diese "innere" erste Öffnung des Halteelements nicht im Außenbereich des Gasgenerators bzw. bildet oder ist nicht Teilbereich des Außengehäuses oder der äußeren Kontur des Gasgenerators. In anderen Worten ist die "innere" erste Öffnung des Halteelements von der Umgebung des Gasgenerators, beispielsweise durch Umwelteinflüsse, nicht unmittelbar zugänglich. er Vollständigkeit halber sei hierzu noch erwähnt, dass bei den Begriffen wasserdicht und gasdicht eine absolute Dichtheit gegenüber jeglicher Diffusionsprozesse, die naturgemäß immer gegeben sind, ausgenommen ist.

Der Anzünder ist also in dem Halteelement durch eine Kunststoffumspritzung, welche als Sockel ausgebildet ist, befestigt bzw. darin gehaltert. Daraus ergibt sich eine leicht und günstig herzustellende Anzündeinheit aus den drei Bauteilen Anzünder, Sockel und Halteelement. Indem die innere erste Öffnung des Halteelements wasserdicht und gasdicht durch die Membran verschlossen ist, bildet die Anzündeinheit zusammen mit der Membran eine kompakte nach einer inneren Seite hin, nämlich im Bereich der inneren ersten Öffnung des Halteelements, gegenüber Umwelteinflüssen dichte Baugruppe aus. Insbesondere kann dabei die Anzündeinheit als äußerst platzsparende Baugruppe ausgeführt sein. Dabei kann die Anzündeinheit selbst einen Durchmesser von nur einem 2 bis 4 fachen Wert, insbesondere einem 2,5 fachen Wert des Durchmessers des Anzünders aufweisen und somit einen äußerst geringen Durchmesser bzw. eine äußerst platzsparende Erstreckung in radialer Richtung aufweisen. Dies ermöglicht einen kostengünstigen Einbau bzw. weiteres Verbauen der Anzündeinheit in weitere Bauteile des Gasgenerators, insbesondere in einen Verschlussboden.

Der Hohlkörper ist also ein beidseitig offener Hohlkörper.

Die stoffschlüssige Verbindung von Halteelement und Membran kann beispielsweise mittels einer radial umlaufenden Schweißung hergestellt sein und ermöglicht einen hohen Grad an Zuverlässigkeit bezüglich eines hermetischen Verschlusses der inneren ersten Öffnung des Halteelements.

Mit dem Begriff "planare" Scheibe ist im Sinne der Erfindung gemeint, dass die Membran als eine im Wesentliche flache und ebene Scheibe in radialer Erstreckungsrichtung, ohne axial davon abstehende Abschnitte oder Randbereiche, ausgebildet ist. Demnach handelt es sich dabei eben gerade nicht um eine topfförmige Gestalt, die einen radialen Bodenbereich und einen dazu abgewinkelten Wandbereich aufweisen würde. Der Begriff "planar" schließt im Sinne der Erfindung dennoch mit ein, dass die Scheibe auf einer oder beiden ihrer gegenüberliegenden Stirnseiten eine oder mehrere Sollbruchstellen bzw. Stellen mit definierter geringeren Materialdicke haben kann, wie es etwa zum Zweck eines besseren Aufreißens bzw. Aufbrechens an diesen Stellen nach einer Aktivierung des Gasgenerators aus dem Stand der Technik bekannt ist.

Ebenso schließt der Begriff "planar" im Sinne der Erfindung auch mit ein, dass die für sich genommen flache Scheibe durch eine Druckbeaufschlagung, etwa vor oder nach einer Aktivierung des Gasgenerators, insgesamt mittels einer Wölbung bzw. Durchbiegung geformt, verformt bzw. durchgebogen ist oder wird.

In einer kostengünstigen Ausführung kann somit die Membran beispielsweise als ausgestanzte Scheibe, welche sich leicht aus einem Blechstreifen oder Blechband, beispielsweise aus Stahl, Kupfer oder Aluminium herstellen lässt, gefertigt sein.

Vorzugsweise ist das Halteelement entlang seiner äußeren und inneren Kontur frei von einem Hinterschnitt und/oder kann sich der Sockel ausnahmslos entlang einer Innenwand des Halteelements erstrecken. Dadurch, dass keine komplexe Kontur, wie ein Hinterschnitt an dem Halteelement angebracht ist, kann dieses äußerst kostengünstig hergestellt sein. Es bedarf hier insbesondere keiner kostspieligen Bearbeitung, wie beispielsweise einer Dreh- oder Fräsbearbeitung. Im Sinne der Erfindung ist der Begriff "Innenwand" des Halteelements wie folgt zu verstehen. Das Halteelement hat bezüglich seiner Längserstreckung zwei sich gegenüberliegende Enden mit jeweils einer Stirnseite bzw. Stirnfläche, die dort jeweils die maximale Erstreckung des Halteelements definieren. Die innere erste Öffnung ist an einem der Enden ausgebildet und eine zweite (äußere) Öffnung an dem dazu gegenüberliegenden Ende, derart dass die erste und zweite Öffnung miteinander in Verbindung stehen und damit einen materialdurchgängigen Durchgang bzw. Durchbruch zwischen den beiden Stirnflächen ausbilden. Anders ausgedrückt stellt das Halteelement einen beidseitig offenen langgestreckten Hohlkörper dar, der eine Wand mit einer gewissen Wandstärke hat und an dessen einer Stirnfläche die erste Öffnung und an dessen dazu gegenüberliegenden Stirnfläche die zweite Öffnung ausgebildet ist. Als "Innenwand" des Halteelements ist nun der innere Wandbereich des Hohlkörpers zu verstehen, der sich ausgehend von einer Öffnung an einer Stirnfläche im Inneren des Hohlkörpers bis hin zu der anderen Öffnung an der dazu gegenüberliegenden Stirnfläche erstreckt, wobei die Stirnflächen selbst nicht mehr zu einem Bereich der "Innenwand" des Halteelements zu rechnen sind.

Indem der Sockel sich ausnahmslos entlang einer Innenwand des Halteelements erstreckt, kann die Kunsstoffspritzung, durch die der Sockel ausgebildet ist, in einem definiert kleinen Bereich des Haltelements platz- und kostensparend angebracht werden. Insbesondere ist hierbei kein Umgriff einer Kunsstoffumspritzung von der Innenwand des Halteelements hin zu einer Außenwand des Halteelements notwendig. Dadurch können sich negativ auswirkende mechanische Spannungen, die sich beim Abkühlen der Kunsstoffumspritzung ausbilden würden vermieden werden, wie es der Fall sein könnte, wenn sich die Kunsstoffumspritzung von der Innenwand über eine Öffnung des Halteelements bis hin bzw. auf dessen Außenwand erstrecken würde.

Bei dem Halteelement kann ein Bereich des ersten Fortsatzes als ein sich nach radial außen hin verbreiternder Konusbereich ausgebildet ist. Zudem oder alternativ dazu kann die Anzündeinheit als vormontierte Baugruppe fertigbar sein. Durch den einfachen und kompakten Aufbau der Anzündeinheit bietet es sich an, diese als bereits vormontierte Baugruppe bei der Herstellung des Gasgenerators zuzuführen. Zudem kann eine weitere vorteilhafte vorgefertigte Baugruppe aus der Anzündeinheit und der auf der ersten Öffnung befestigten Membran hergestellt werden.

Der Fortsatz bzw. dessen stirnseitiges Ende definiert die erste Öffnung. In einem einfachen Fall handelt es sich bei dem Fortsatz um ein kreisförmig hohlzylindrisches Ende des Halteelements. Der Fortsatz erstreckt sich dabei in axialer Längsrichtung über den Anzünder hinaus. Anders ausgedrückt ragt damit der Anzünder bezüglich dessen Längserstreckung nicht bis an die Längserstreckung des Fortsatzes heran. In anderen Worten steht der Fortsatz ein Stück weit über den Anzünder hervor bzw. hinaus. Durch eine derartige Ausgestaltung des Fortsatzes lässt sich die Anzündeinheit besonders gut als vormontierte Baugruppe fertigen bzw. weiterverarbeiten. Indem nämlich der Fortsatz ein Stück weit gegenüber dem Anzünder hervor- bzw. hinausragt, kann der sensiblere Anzünder durch den Fortsatz geschützt sein, beispielsweise vor ungewollten mechanischen Krafteinflüssen bzw. Kontakten mit anderen vormontierten Baugruppen bzw. Bauteilen, wenn diese beispielsweise in einem Wendelförderer bei der Herstellung des Gasgenerators als Schüttgut hantiert werden.

Insbesondere kann das Halteelement an seiner Innenwand eine Einschnürung haben, durch die sich der Anzünder zumindest bereichsweise erstreckt, wobei die Einschnürung im Längsschnitt betrachtet zu einer Mittelachse des Halteelements hin bogenförmig, insbesondere in Form eines Kreissegments, ausgebildet ist, insbesondere derart dass sich entlang der Innenwand eine konkave-konvexe-konkave Kontur ausbildet, wobei vorzugsweise das Halteelement frei von einem geometrisch ausgeformten Verdrehschutz für den Anzünder und/oder den Sockel ausgebildet ist.

Die Einschnürung im Innenbereich des Halteelements stellt bezüglich eines inneren Durchmessers des Halteelements eine Durchmesserreduzierung dar. Anders ausgedrückt ist die Einschnürung eine im Inneren des Halteelements befindliche Verengung, welche zum einen die Oberfläche der Innenwand entlang der Längserstreckung des Halteelements erhöht und damit eine relativ große Kontaktfläche und damit Haftungsfläche bzw. Reibungsfläche für den über einen großen Bereich an die Innenwand anliegenden Sockel bietet. Zum anderen stellt die Einschnürung eine Engstelle für den Anzünder und/oder Sockel dar, sodass im Funktionsfall des Gasgenerators ein in dem Gasgenerator ausgebildeter Druck, insbesondere von der ersten Öffnung des Halteelements her wirkend, den Anzünder und/oder Sockel nicht durch die Engstelle hindurch in die Umgebung des Gasgenerators ungewünscht auspressen bzw. hinausdrücken kann.

Zudem ist die Einschnürung bezüglich ihrer geometrischen Ausgestaltung, insbesondere entlang ihrer Längserstreckung, harmonisch bzw. ausgeglichen ausgestaltet, indem sie bogenförmig, insbesondere in Form eines Kreissegments, ausgebildet ist, wodurch sich nach einem Anspritzen eines Kunststoffs im Bereich der Einschnürung eine Abkühlung des Kunststoffs und damit Ausbildung des Sockels ergibt, die optimal lunkerfrei bzw. ohne nennenswerte mechanische Spannungen ist. Unter dem Begriff "konkave-konvexe-konkave Kontur" ist hier gemeint, dass die Einschnürung an ihrem geringsten Innendurchmesser einen konvexen Konturabschnitt ausbildet, also eine bogenförmige Kontur mit einer Bogenkrümmung hin zu der Mittelachse des Halteelements, wobei sich an diesen konvexen Konturabschnitt zu seinen beiden axial benachbarten Seiten jeweils ein konkaver Konturabschnitt anschließt, wodurch sich dort jeweils ein Krümmungsradius mit gegensätzlichem Vorzeichen, verglichen zu dem Krümmungsradius des konvexen Konturabschnitts, ergibt. In anderen Worten ausgedrückt, betrachtet man von der ersten Öffnung des Haltelements her die innere Kontur des Halteelements bzw. "fährt" man diese gedanklich ihrem Verlauf nach, dann ergibt sich zunächst ein konkaver Konturabschnitt, welcher in bogenförmiger Weise die Kontur nach radial innen, in Richtung Mittelachse des Halteelements, "leitet" bzw. ausprägt. Daran schließt sich ein konvexer Konturabschnitt an, welche die größte Reduzierung des Innendurchmessers der Einschnürung ausbildet. Wiederum daran schließt sich der zweite konkave Konturabschnitt an. Durch eine derartige harmonische geometrische Ausbildung der Innenkontur des Halteelements entlang seiner Längserstreckung ist es möglich, dass die Kunststoffeinspritzung bzw. der dadurch gebildete Sockel alleinig durch vorgenannte innere Kontur des Halteelements an der Innenwand des Halteelements haftet bzw. sicher gegenüber einer ungewollten axialen Relativbewegung und/oder auch radialen Torsionsbewegung an dem Halteelement anliegt. Somit ist es auch möglich, dass das Halteelement keinen zusätzlichen geometrisch ausgeformten Verdrehschutz aufweisen muss, wie es etwa bei einem polygonförmigen Querschnitt des Innendurchmessers des Halteelements aus dem Stand der Technik bekannt ist.

Vorzugsweise schließen sich an die Einschnürung beidseitig Bereiche der Innenwand an, welche im Wesentlichen parallel zur Mittelachse des Halteelements ausgebildet sind, und ein erster, zweiter und dritter Krümmungsradius der Innenwand bestimmen die Form der Einschnürung, wobei der zweite Krümmungsradius die engste Stelle der Einschnürung definiert und insbesondere die Krümmungsradien jeweils denselben Wert, vorzugsweise von 2,0 mm, aufweisen. Durch eine derartige Ausbildung der Kontur der Innenwand des Halteelements, vor allem im Bereich der Einschnürung, ergibt sich ebenfalls eine äußerst harmonische geometrische Ausbildung der Innenwand und entsprechende zuvor genannte Vorteile. Insbesondere dadurch, dass alle drei Krümmungsradien denselben Wert haben, wird diese harmonische Ausbildung der Kontur noch begünstigend verstärkt.

Das Halteelement kann einen ersten Wulst haben, der sich in Form der Einschnürung auf der Innenseite des Halteelements nach radial innen erstreckt, wobei sich längsaxial beabstandet von dem ersten Wulst ein zweiter Wulst auf der Außenseite des Halteelements nach radial außen erstreckt, wobei insbesondere der erste Wulst einen Anschlag für den Anzünder und/oder Sockel ausbildet und/oder der zweite Wulst ein Anschlag gegenüber einem Verschlussboden und/oder einer Anzündkappe ist.

Wie schon weiter oben beschrieben, kann der erste Wulst in Form der Einschnürung eine gewollte Engstelle für den Anzünder und/oder Sockel darstellen. So ist es möglich, dass im Funktionsfall des Gasgenerators ein stark ansteigender Druck funktionsbedingt in dem Gasgenerator ausgebildet wird und von Seite der ersten Öffnung des Halteelements her auf den Anzünder und/oder Sockel einwirkt. Der erste Wulst kann dann wie ein Anschlag bzw. eine geometrisches Stoppelement für den Anzünder bzw. den Sockel wirken, sodass diese Elemente nicht durch die Engstelle hindurch in die Umgebung des Gasgenerators ungewünscht auspresst bzw. hindurchgedrückt werden können.

Der zweite Wulst kann quasi eine Doppelfunktion als Anschlagelement haben, indem das Halteteil zum einen bei seinem Einbau in ein weiteres Bauteil, beispielsweise einen Verschlussboden mit einem Durchlass, in dieses Bauteil (dessen Durchlass) eingesteckt wird. Hier kann dann das Halteteil nur soweit in das weitere Bauteil eingesteckt werden, bis der zweite Wulst als mechanischer Anschlag wirkt bzw. ein weiteres Einstecken stopt. Zum anderen kann ein wieder anderes Bauteil, beispielsweise eine Anzündkappe, entlang der Außenwand des Halteteils nur soweit über das Halteteil aufgesteckt werden, bis dieses andere Bauteil an dem zweiten Wulst mechanisch anstößt und dort gestoppt werden kann.

Bei dem Gasgenerator kann ein topfförmiger Diffusor mit zweiten Durchströmöffnungen von dem Verschlussboden verschlossen sein, wobei ein Durchlass des Verschlussbodens von der Anzündeinheit, insbesondere durch ein Einschweißen des Halteelements, verschlossen ist und vorzugsweise der Diffusor und der Verschlussboden mit der Anzündeinheit einen Großteil des Außengehäuses des Gasgenerators bilden. Durch diese Ausbildung kann insbesondere das Außengehäuse des Gasgenerators durch nur wenige Bauteile und wenige Fügeschritte gebildet bzw. hergestellt werden. Dies ist insbesondere der Fall, wenn die Anzündeinheit bereits als vormontierte Baugruppe, oder sogar die Anzündeinheit inklusive der die innere erste Öffnung des Halteelements verschließende Membran als vorgefertigte Einheit zugeführt wird.

Insbesondere ist eine/die Anzündkappe mit ersten Durchströmöffnungen im Inneren des Gasgenerators verschiebbar an der Außenseite des Halteelements positioniert, derart dass nach einer Aktivierung des Gasgenerators ein Bereich der Außenseite des Halteelements als eine Führung für eine Verschiebung der Anzündkappe in einer Verschieberichtung dient. Die Anzündkappe soll also bestimmungsgemäß bei der Funktion des Gasgenerators verschoben werden. Hierbei kann die Anzündkappe ausgehend von einer Ruhestellung, bei der sie vorzugsweise auf dem zweiten Wulst aufliegen kann, in eine Verschieberichtung, weg von dem zweiten Wulst, verschoben werden. Damit diese Verschiebung präzise und reproduzierbar erfolgen kann, dient vorteilhaft die Außenkontur bzw. die Außenseite des Halteelements als Führungselement für eine derartige Verschiebung.

Im Inneren der Anzündkappe kann eine Anzündkammer mit einem ersten Treibstoff ausgebildet sein, wobei insbesondere zwischen dem/einen Konusbereich des Halteelements und der Anzündkappe ein sich zu den ersten Durchströmöffnungen der Anzündkappe hin verjüngender Bereich der Anzündkammer ausgebildet ist. Dadurch, dass sich insbesondere ein derartiger verjüngender Bereich der Anzündkammer ausgebildet kann nach einer Aktivierung des Gasgenerators bei dem der erste Treibstoff angezündet wird und bestimmungsgemäß Gas und/oder Partikel erzeugt, dieses Gas und/oder Partikel äußerst effizient und schnell zu und durch die ersten Durchströmöffnungen hindurch transportiert werden bzw. dorthin strömen, um danach einen weiteren zweiten Treibstoff schnell anzünden zu können. Indem nämlich ein derartiger verjüngender Bereich der Anzündkammer ausgebildet ist, wirkt dieser verengende Bereich vorteilhaft wie eine Düse, welche das Gas und/oder Partikel zu beschleunigen vermag.

Insbesondere kann eine ringförmige Brennkammer mit einem zweiten Treibstoff die Anzündkappe umgebend ausgebildet sein, wobei die Brennkammer von dem Diffusor und dem Verschlussboden gegenüber der Umgebung des Gasgenerators abgegrenzt ist und vorzugsweise ein Filter und/oder ein Volumenausgleich in der Brennkammer aufgenommen sind. Insbesondere können beide Treibstoffe, der erste und der zweite Treibstoff, jeweils als eine Schüttung einzelner Treibstoffkörper, wie z.B. gepresste, insbesondere trocken gepresste, Treibstofftabletten oder extrudierte Körper umfassen, aber auch in Form von gebrochenen Granulaten oder in Form eines monolithischen Formkörpers oder in Form von aneinandergereihten Scheiben bzw. Ringen vorliegen. Der erste und der zweite Treibstoff können außerdem bezüglich ihrer chemischen Zusammensetzung und/oder ihrer Form gleichartig sein oder sich diesbezüglich voneinander unterscheiden.

Ein nebengeordneter Aspekt der Erfindung betrifft ein Gassackmodul mit einem Gasgenerator, einem von dem Gasgenerator aufblasbaren Gassack und einer Befestigungseinrichtung zur Anbringung des Gassackmoduls an einem Fahrzeug, wobei der Gasgenerator gemäß der zuvor beschriebenen Art und Weise ausgebildet ist.

Ferner wird im Rahmen der vorliegenden Anmeldung ein Fahrzeugsicherheitssystem, insbesondere zum Schutz einer Person, beispielsweise eines Fahrzeuginsassen oder Passanten, mit einem Gasgenerator, insbesondere als Teil eines Gassackmoduls oder als Teil eines Sicherheitsgurtsystems oder als Teil eines Aktuatorbauteils, und mit einer elektronischen Steuereinheit, mittels der der Gasgenerator bei Vorliegen einer Auslösesituation aktivierbar ist, offenbart und beansprucht. Bei dem erfindungsgemäßen Fahrzeugsicherheitssystem ist vorzugsweise der Gasgenerator gemäß der zuvor beschriebenen Art und Weise ausgebildet. Insbesondere kann dabei der Gasgenerator, wenn er Teil eines Aktuatorbauteils ist, als ein Aktuator für einen Motorhabenaufsteller, bei dem im Aktivierungsfall eine Motorhaube eines Fahrzeugs zum Schutz für eine Person aufgestellt bzw. schnell angehoben wird, eingesetzt sein. Wobei hierbei auch eine Anwendung als Aktuator für ein Batterietrennsystem, bei dem schnell ein Stromkreis aus sicherheitstechnischen Gründen unterbrochen wird, oder als Aktuator für eine aktivierbare Kopfstütze, wobei eine Kopfstütze über einen gewisse Wegstrecke äußerst schnell verlagert werden kann, mit eingeschlossen ist.

Die Erfindung wird im Folgenden anhand von Ausführungsbeispielen unter Bezugnahme auf die beigefügten, schematischen Figuren näher erläutert:
Darin zeigen:
Fig. 1 eine Längsschnittansicht durch einen erfindungsgemäßen Gasgenerator und
Fig. 2 eine dreidimensionale Darstellung des Gasgenerators, wie er in Fig. 1 dargestellt.

Im Folgenden werden für gleiche und gleichwirkende Teile dieselben Bezugsziffern verwendet.

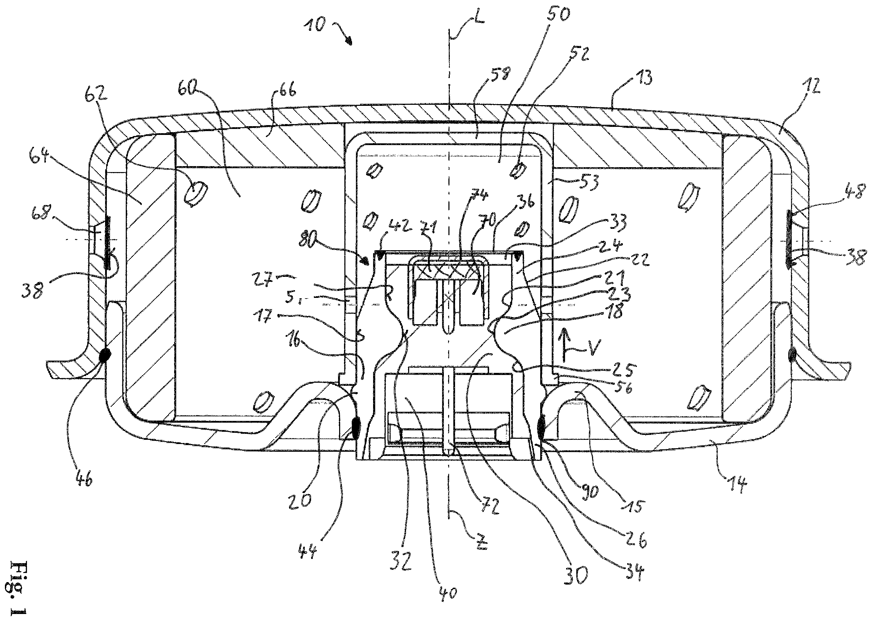

Fig. 1 zeigt einen Längsschnitt durch einen erfindungsgemäßen Gasgenerator 10 mit einer Längsachse L entlang derer sich der Gasgenerator 10 axial erstreckt und die insbesondere auch eine Mittelachse des Gasgenerators 10 darstellt. Der Gasgenerator 10 weist einen topfförmigen Diffusor 12 mit einem Diffusorboden 13 auf, an den sich eine radial umlaufende Seitenwand mit zweiten Durchströmöffnungen 68 anschließt, wobei die Durchströmöffnungen 68 mit einer radial umlaufenden Verdämmung 38 mittels einer vierten Verbindung 48, die vorzugsweise eine umlaufende Schweißverbindung ist, aber auch als Klebeverbindung ausgeführt sein kann, verschlossen sind. Der Diffusor 12 ist an seiner offenen Seite, die dem Diffusorboden 13 gegenüberliegt, durch einen Verschlussboden 14 mittels einer dritten Verbindung 46, die vorzugsweise eine umlaufende Schweißverbindung ist, verschlossen. Der Verschlussboden 14 hat eine mittige Öffnung, die als Durchlass 90 ausgebildet ist und von einer Anzündeinheit 80 verschlossen ist. Dabei ist die Anzündeinheit 80 als eine, vorzugsweise vorgefertigte, Baugruppe ausgebildet, die ein Halteelement 16, einen Anzünder 70 und einen Sockel 30 umfasst. Dabei ist der Anzünder 70 mittels einer Kunststoffumspritzung, welche den Sockel 30 bildet, in dem Halteelement 16 gehaltert. Die Anzündeinheit 80 kann dadurch hergestellt werden, indem zunächst der Anzünder 70 in das als Hohlkörper gebildete Halteelement 16 eingeführt und innerhalb des Halteelements 16, beabstandet zu dessen Innenwand 27, positioniert wird. Danach wird Kunststoff zwischen dem Anzünder 70 und der Innenwand 27 eingespritzt, bis der Sockel 30 ausgebildet ist und der Anzünder 70 fest in dem Halteelement 16 fixiert ist. Anders ausgedrückt wird Kunststoff zwischen dem Anzünder 70 und der Innenwand 27 des Halteelements 16 eingespritzt und der Sockel 30 somit hergestellt. Der Sockel 30 haftet hierbei an der Innenkontur des Halteelements 16 bzw. ist dort angespritzt und bettet zugleich fest den Anzünder 70 ein. Die Anzündeinheit 80 ist dabei mit ihrem Halteelement 16 in den Durchlass 90 eingeschoben bzw. eingepresst und dort mittels einer zweiten Verbindung 44, vorzugsweise auch eine umlaufende Schweißverbindung, befestigt. Der Diffusor 12, der Verschlussboden 14 und die Anzündeinheit 80 bilden zusammen im Wesentlichen ein Außengehäuse des Gasgenerators 10.

Für den Gasgenerator 10 gilt, dass er vor seiner Aktivierung, also vor seiner bestimmungsgemäßen Funktion, in einem gewissen Maße dicht gegenüber seiner Umgebung bzw. dortigen Umwelteinflüssen ausgebildet sein sollte. Mit den vorgenannten Verbindungen, nämlich der zweiten, dritten und vierten Verbindung 44, 46, 48, ist bereits eine relativ gute Abdichtung des Gasgenerators 10 gegenüber seiner Umgebung erreicht, wobei sich die vorgenannten Verbindungen 44, 46, 48 im Außenbereich des Gasgenerators 10, zumindest in der Nähe davon, befinden. Der Gasgenerator 10 weist allerdings noch eine weitere dichtende Verbindung, nämlich eine erste Verbindung 42 auf, welche im Inneren des Gasgenerators 10, relativ weit weg von seinem Außengehäuse gelagert und insbesondere nicht unmittelbar zugänglich von der Umgebung des Gasgenerators 10 ist. Konkret verschließt hierbei eine Membran 36 eine innere erste Öffnung 33 des Halteelements 16 hermetisch dicht. Die Membran 36 wird mittels der ersten Verbindung 42 an dem Halteelement 16 befestigt. Hierdurch ist eine weitere zusätzliche Abdichtung insbesondere im Innenbereich des Gasgenerators 10 geschaffen. Die Membran 36 ist vorzugsweise aus einer flachen Scheibe aus Metall ausgebildet und an bzw. auf diejenige Stirnseite des Halteelements 16, insbesondere durch eine radial umlaufende Laserschweißung, aufgeschweißt, welche im Bereich der ersten Öffnung 33 liegt.

Das Halteelement 16 ist als ein langgestreckter, hülsenförmiger Hohlkörper ausgebildet, welcher an einer Stirnseite die erste innenliegende Öffnung 33 hat, wobei an der gegenüberliegenden Stirnseite eine zweite Öffnung 34 liegt, die nach außen weist bzw. auch dem Außengehäuse des Gasgenerators 10 hinzuzurechnen ist. Das Halteelement 16 ist entlang seiner inneren Kontur bzw. längsaxial entlang seiner Innenwand 27 besonders harmonisch verlaufend ausgebildet. Insbesondere befindet sich dort kein Hinterschnitt. Vielmehr ist hier die innere Kontur durch einen konkav-konvex-konkaven Verlauf entlang der Längserstreckung des Halteelements 16 besonders ausgeglichen ausgebildet. Konkret erstreckt sich dabei ausgehend von der inneren ersten Öffnung 33 die Innenwand 27 des Halteelements 16 zunächst eine gewisse Wegstrecke im Wesentlichen parallel zur Mittelachse Z des Halteelements 16. Daran anschließend wird sie durch einen ersten Krümmungsradius 21 bogenförmig konkav nach radial innen geleitet und geht anschließend mit einem dazu entgegengesetzt ausgerichteten zweiten Krümmungsradius 23 in eine Stelle mit dem geringsten Innendurchmesser des Halteelements 16 über, um dort eine bogenförmige konvexe Einschnürung 32 auszubilden. Hieran folgend schließt sich wieder eine mit einem dritten Krümmungsradius 25 bogenförmig konkav ausgeprägter Verlauf der Innenkontur des Halteelements 16 an, welcher für eine gewisse Wegstrecke wieder in eine im Wesentlichen parallel zur Mittelachse Z des Halteelements 16 ausgebildete Form anschließt, die hin zur zweiten, äußeren Öffnung 34 des Halteelements 16 verläuft.

Insbesondere weisen dabei alle drei Krümmungsradien 21, 23 und 25 denselben Wert auf, vorzugsweise einen Wert von 2,0 mm. Hierdurch wird eine besonders harmonische Innenkontur des Halteelements 16 ausgebildet. Besonders vorteilhaft wird dadurch der Sockel 30 mit einer äußerst stabilen und beständigen Haftung bzw. Adhäsion an der Oberfläche der Kontur der Innenwand 27 des Halteelements 16 gehalten und so gegen eine mechanische Verdrehung gesichert. In anderen Worten ausgedrückt haftet der Sockel 30 durch die vorgenannte Ausgestaltung der Kontur der Innenwand 27 des Halteelements 16 besonders gut und fest. Es hat sich unerwarteter Weise herausgestellt, dass durch diese besondere Kontur auf einen herkömmlich bekannten geometrisch ausgeformten Verdrehschutz verzichtet werden kann. Gemeint ist damit, dass auf eine geometrische Ausformung der Innenwand 27, welche im Querschnitt betrachtet, eine radiale Verdrehung des Sockels 30 verhindern würde, verzichtet werden kann. Eine derartige Verdrehung könnte z.B. durch einen an den Anzünder 70 angesteckten Stecker (nicht dargestellt) auf den Anzünder 70 bzw. durch Kraftübertrag auf den Sockel 30 eingeleitet werden, wenn mit einem solchen Stecker unbeabsichtigt eine Torsionsbewegung, also in radial umlaufender Richtung zu der Mittelachse Z des Halteelements 16 ausgerichtet, ausgeführt werden würde. In anderen Worten ist die Adhäsion bzw. Haftreibung des Sockels 30 gegenüber der Kontur der Innenwand 27 des Haltelements 16 derart stark bzw. ausreichend, dass dies alleinig für eine sichere Position des Sockels 30 gegenüber einer unbeabsichtigten Torsionsbewegung des Sockels 30 ausreichend ist.

Die Krümmungsradien können auch andere Werte aufweisen. So wäre ein Wert von 0,5 mm bis 3 mm für den ersten Krümmungsradius 21, eine Wert von 0,5 mm bis 2 mm für den zweiten Krümmungsradius 23 und ein Wert von 1 mm bis 2 mm für den dritten Krümmungsradius 25 denkbar.

Das Halteelement 16 hat im Bereich seiner ersten Öffnung 33 einen ersten Fortsatz 24, welcher den Anzünder 70 bezüglich seiner Längserstreckung überragt. Anders ausgedrückt steht der erste Fortsatz 24 gegenüber dem Anzünder 70 über eine gewisse Wegstrecke axial hervor. Konkret ist der Anzünder 70 in seiner Längserstreckung dort mit einer Kappe 74 abgeschlossen. Demnach erstreckt sich das Halteelement 16 mit seinem ersten Fortsatz 24 in Längsrichtung über die Kappe des Anzünders 70 hinaus. Dies hat den Vorteil, dass bei der Montage des Gasgenerators 10 die etwas sensible Kappe 74 des Anzünders 70 vor bzw. bei dem Einbau von weiteren Bauteilen geschützt ist. Gemeint ist damit, dass im Inneren der Kappe 74 ein sensibles zündfähiges Element 71, beispielsweise in Form einer Pyrotechnik, positioniert sein kann und ein starker mechanischer Kontakt der Kappe 74 mit anderen Bauteilen bei der Montage des Gasgenerators 10 vermieden werden sollte. Bei dem vorliegenden Gasgenerator 10 ist es vorteilhaft möglich, die Anzündeinheit 80 als vormontierte Baugruppe zu fertigen und als Schüttgut, beispielsweise in einem Wendelförderer, der Montage des Gasgenerators 10 zuzuführen. Hierbei kann es naturgemäß zu mechanischen Kontakten zwischen einzelnen vorgefertigten einzelnen Anzündeinheiten kommen. In diesem Fall kommt die vorgenannte Ausbildung des ersten Fortsatzes 24, nämlich dass der erste Fortsatz 24 den Anzünder 70 bezüglich seiner Längserstreckung überragt, als mechanischer Schutz für den Anzünder 70 bzw. dessen Kappe 74 zur Geltung.

Ein zweiter Fortsatz 26 des Halteelements 16 ist dem ersten Fortsatz 24 axial gegenüber positioniert und umschließt die zweite äußere Öffnung 34 des Halteelements 16. Der zweite Fortsatz 26 kann eine innerhalb des Halteelements 16 ausgebildete Schnittstelle 40 für einen an den Gasgenerator anschließbaren Stecker (nicht gezeigt) umschließen. Konkret kann dabei der zweite Fortsatz 26 mit seiner Innenwand zur Aufnahme des Steckers dienen, welcher an ein oder mehrere Kontaktelemente 72 des Anzünders 70 für eine elektrische Verbindung an ein Steuergerät (nicht dargestellt) zur Aktivierung des Gasgenerators 10 angsteckt sein kann. Zudem kann das Halteelement 16 in bzw. mit dem äußeren Bereich des zweiten Fortsatzes 26 an den Verschlussboden 14 mittels der zweiten Verbindung 44 befestigt sein.

Das Halteelement 16 hat einen ersten Wulst 18, der sich in Form der Einschnürung 32 auf der Innenseite des Halteelements 16 nach radial innen erstreckt. Der erste Wulst 18 stellt damit eine buckelförmige Verengung in Inneren des Halteelements 16 dar und kann vorteilhaft damit im Funktionsfall des Gasgenerators 10 eine Art Anschlag bzw. Stopp-Element für den Anzünder 70 bzw. den Sockel 30 bilden. Gemeint ist damit, dass bei der bestimmungsgemäßen Funktion des Gasgenerators 10 im Inneren des Gasgenerators 10 durch ein dort erzeugtes Gas ein gewisser Druck ausgebildet wird, welcher auch von der ersten Öffnung 33 des Halteelements 16 her auf den Anzünder 70 und/oder Sockel 30 einwirken kann. Der erste Wulst 18 bzw. die dadurch ausgebildete Einschnürung 32 bewirken vorteilhaft, dass dabei der Anzünder 70 und/oder der Sockel 30 nicht ungewünscht in die Umgebung des Gasgenerators auspresst bzw. hinausdrückt werden können.

Ein zweiter Wulst 20 ist längsaxial beabstandet zu dem ersten Wulst 18 auf der Außenseite des Halteelements 16, sich nach radial außen hin erstreckend, ausgebildet. Der zweite Wulst 20 kann vorteilhaft gleich in zweifacher Art und Weise einen mechanischen Anschlag gegenüber weiteren Bauteilen ausbilden. Zum einen kann er bei der Montage des Halteelements 16 bzw. der vormontierten Anzündeinheit 80 mit dem Verschlussboden 14 als Anschlag bzw. Stopp-Element wirken, indem das Halteelement 16 bzw. die Anzündeinheit 80 durch den Durchlass 90 des Verschlussboden 14 "auf Anschlag" eingesteckt bzw. eingeschoben wird, sodass eine axiale definierte Position des Halteelements 16 bzw. der Anzündeinheit 80 erreichbar ist.

Zum anderen kann der zweite Wulst 20 gegenüber bzw. für eine Anzündkappe 53, welche auf der Außenseite des Halteelements 16 aufgesteckt bzw. aufgepresst ist, als mechanischer Anschlag wirken. Die Anzündkappe 53 weist dabei einen radial nach außen abstehenden Flansch 56 auf, welcher an dem zweiten Wulst 20 bei der vorgenannten Montage der Anzündkappe 53 anschlagen kann. Die Anzündkappe 53 hat einen im Wesentlichen flach ausgebildeten Kappenboden 58, an den sich eine umlaufende Seitenwand mit ersten Durchströmöffnungen 54 anschließt. Die Anzündkappe 53 wird bei ihrer Montage an bzw. auf das Halteelement 16 über eine gewisse axiale Wegstrecke mit der Innenseite ihrer Seitenwand derart auf das Halteelement 16 aufgesteckt, dass die Anzündkappe 53 im Funktionsfall des Gasgenerators 10 verschiebbar entlang einer Verschieberichtung V, die im Wesentlichen parallel zur Längsachse L des Gasgenerators 10 ausgerichtet ist, gelagert ist.

Die Anzündkappe 53 bildet in ihrem Inneren eine Anzündkammer 50 aus, welche mit einem ersten Treibstoff 52 befüllt ist. Konkret ist die Anzündkammer 50 durch das Innere der Anzündkappe 53 und die darin aufgenommene Kontur der Anzündeinheit 80 mit der daran befestigten Membran 36 ausgebildet. Um die Anzündkappe 53 herum ist eine ringförmige Brennkammer 60 mit einem zweiten Treibstoff 62 ausgebildet, wobei die Brennkammer 60 von dem Diffusor 12 und dem Verschlussboden 14 gegenüber der Umgebung des Gasgenerators 10 abgegrenzt ist und noch einen Filter 64 und einen Volumenausgleich 66 aufnimmt. Die beiden Treibstoffe (52, 62) sind in Fig. 1 lediglich symbolhaft dargestellt. Im vorliegenden Fall liegen sie beide als jeweils lose Schüttung einzelner Treibstoffkörper vor und füllen die ihnen zugeordneten Kammern im Wesentlichen vollständig aus. Somit ist die Anzündkammer 50 mit dem ersten Treibstoff 52 und die Brennkammer 60 mit dem zweiten Treibstoff 62 jeweils gefüllt. Der Volumenausgleich 66 ist aus einem elastischen Material, wie beispielsweise Silikon oder einem Metallgestrick, ausgeformt und puffert Toleranzen bei einer Befüllung der Brennkammer 60 mit zweitem Treibstoff 62 ab, wobei er zudem eine gewisse mechanische Vorspannung auf die Schüttung aus dem zweiten Treibstoff 62 ausübt, sodass die Treibstoffkörper keine Relativbewegungen zueinander im Ruhezustand des Gasgenerators 10, also vor dessen Aktivierung, ausüben können.

Die bestimmungsgemäße Funktion des Gasgenerators 10 läuft ab, wie folgend beschrieben. Nach einer Aktivierung des Gasgenerators 10 aus dessen Ruhezustand heraus, wird mittels des Anzünders 70 ein heißes Anzündgas und/oder Anzündpartikel durch Aufreißen bzw. einem lokalen Öffnen der Kappe 74 des Anzünders 70 aus dem Anzünder 70 heraus freigesetzt. Anzündgas und/oder Anzündpartikel durchbrechen bzw. öffnen die hermetisch abdichtende Membran 36 und strömen in die Anzündkammer 50 ein, um den ersten Treibstoff 52 anzuzünden. Dadurch wird der erste Treibstoff 52 angezündet bzw. chemisch umgesetzt und Gas und/oder Partikel werden erzeugt, welche zum einen zur insgesamten Gasproduktion des Gasgenerators 10 beitragen, zum anderen jedoch hier hauptsächlich dazu verwendet werden, durch die ersten Durchströmöffnungen 54 der Anzündkappe 53 hindurch in die Brennkammer 60 zu strömen, um den dortigen zweiten Treibstoff 62 anzuzünden.

Durch die Umsetzung des ersten Treibstoffs 52 bildet sich innerhalb der Anzündkammer 50 ein schnell ansteigender Druck auf, welcher die Anzündkappe 53 in Verschieberichtung V bewegt bzw. in Bewegung setzt. Dies ist bestimmungsgemäß vorteilhaft so gewollt, damit die ersten Durchströmöffnungen 54 quasi mitbewegt werden und ein größerer Bereich des zweiten Treibstoffs 62 durch das aus den ersten Durchströmöffnungen 54 einströmende Gas und/oder Partikel optimierter angezündet werden kann. Bei der Verschiebung der Anzündkappe 53 ist vorteilhaft ein gewisser äußerer Bereich des Halteelements 16 als eine Führung 17 für die Anzündkappe 53 ausgebildet, sodass diese äußerst präzise und vorhersehbar in gerader Richtung axial verschoben werden kann. Im Bereich der ersten Durchströmöffnungen 54 der Anzündkappe 53 ist die dazu gegenüberliegende äußere Wandung des Halteelements 16 über einen gewissen Bereich mit einem nach radial außen verlaufenden Konusbereich 22 ausgebildet. Es ergibt sich dadurch ein Bereich der Anzündkammer 50, welcher zu den ersten Durchströmöffnungen 54 hin verjüngend zulaufend ausgebildet ist. Anders ausgedrückt wird dadurch eine Art düsenförmige Verengung der Anzündkammer 50 hin zu den ersten Durchströmöffnungen 54 ausgebildet, wodurch die Gase bzw. Partikel, welche durch die ersten Durchströmöffnungen 54 hindurchströmen sollen, vorteilhaft beschleunigt werden und somit den zweiten Treibstoff 62 noch schneller anzünden können.

Durch eine hohe Druckausbildung in der Brennkammer 60 kann das Verschlusselement 14 in einem gebogenen Bereich, der als eine Wölbung 15 ausgebildet ist, vorteilhaft elastisch und/oder plastisch verformt werden, um diese Druckausbildung quasi abzufedern.

Schließlich wird durch die Anzündung und Umsetzung des zweiten Treibstoffs 62 der Hauptteil des Gases erzeugt, welches bestimmungsgemäß durch den Gasgenerator 10 bereitgestellt werden soll. Dieses Gas wird zunächst noch durch den in der Brennkammer 60 befindlichen Filter 64 gekühlt und/oder gereinigt, bevor es die dichte Verdämmung 38 öffnet bzw. diese durchbricht und durch die zweiten Durchströmöffnungen 68 des Diffusors 12 den Gasgenerator 10 zu dessen Umgebung hin verlässt.

Die Anzahl und Position der ersten Durchströmöffnungen 54 in der Anzündkappe 53 und der zweiten Durchströmöffnungen 68 in dem Diffusor 12 sind in den Figuren lediglich symbolhaft gezeigt. In der konkreten Ausführungsform sind die Durchströmöffnungen 54, 68 als runde Löcher radial umlaufend in gleichmäßigem Abstand zueinander in einer Reihe ausgeführt. Es ist aber auch möglich, dass derartige Parameter, wie aus dem Stand der Technik bekannt, verschieden sein können und beliebig in sinnvoller Art und Weise untereinander kombiniert werden können. So ist zum Beispiel denkbar, dass die Durchströmöffnungen 54, 68 bereichsweise unterschiedliche Formen und/oder Größen haben können und in mehreren umlaufenden Reihen, insbesondere zueinander mit den Öffnungen versetzt, radial umlaufend angeordnet sein können.

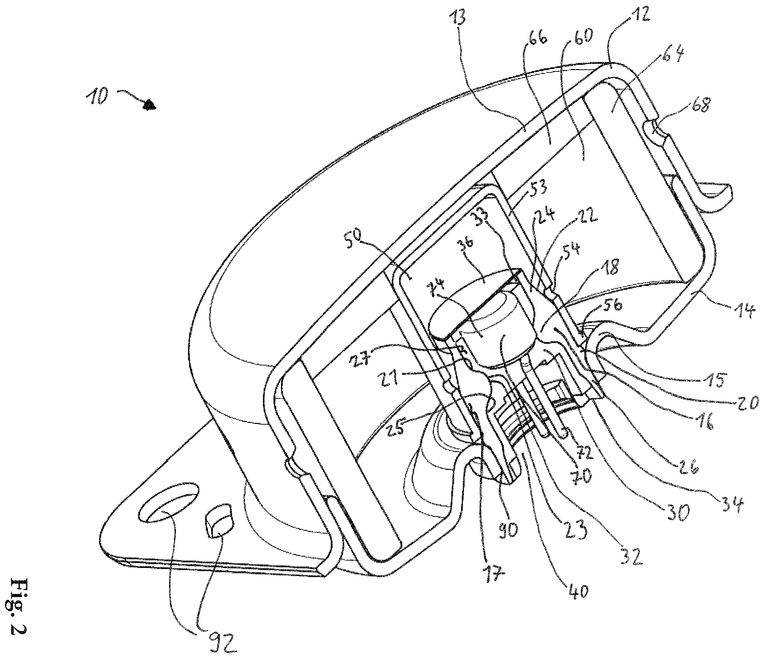

Fig. 2 zeigt dieselbe Ausführungsform des Gasgenerators 10, wie er in Fig. 1 dargestellt ist, in perspektivischer Ansicht. Hierbei werden für gleiche und gleichwirkende Teile dieselben Bezugsziffern wie in Fig. 1 verwendet. Insbesondere sind in Fig. 2 noch zwei Öffnungen 92, die als Bohrung oder Schlitz ausgeführt sein können, in einer sich nach radial außen erstreckenden flanschartigen Ausformung des Diffusors 12 dargestellt, welche für eine Befestigung des Gasgenerators 10 an einem Gassackmodul (nicht dargestellt) dienen können.

### Bezugszeichen

- 10: Gasgenerator
- 12: Diffusor
- 13: Diffusorboden
- 14: Verschlussboden
- 15: Wölbung
- 16: Halteelement
- 17: Führung
- 18: erster Wulst
- 20: zweiter Wulst
- 21: erster Krümmungsradius
- 22: Konusbereich
- 23: zweiter Krümmungsradius
- 24: erster Fortsatz
- 25: dritter Krümmungsradius
- 26: zweiter Fortsatz
- 27: Innenwand
- 30: Sockel
- 32: Einschnürung
- 33: erste Öffnung
- 34: zweite Öffnung
- 36: Membran
- 38: Verdämmung
- 40: Schnittstelle
- 42: erste Verbindung
- 44: zweite Verbindung
- 46: dritte Verbindung
- 48: vierte Verbindung
- 50: Anzündkammer
- 52: erster Treibstoff
- 53: Anzündkappe
- 54: erste Durchströmöffnung
- 56: Flansch
- 58: Kappenboden
- 60: Brennkammer
- 62: zweiter Treibstoff
- 64: Filter
- 66: Volumenausgleich
- 68: zweite Durchströmöffnung
- 70: Anzünder
- 71: zündfähiges Element
- 72: Kontaktelement
- 74: Kappe
- 80: Anzündeinheit
- 90: Durchlass
- 92: Öffnung
- L: Längsachse
- V: Verschieberichtung
- Z: Mittelachse

## Patentansprüche

1. Gasgenerator (10), für ein Fahrzeugsicherheitssystem, mit einer Anzündeinheit (80), umfassend ein Halteelement (16), einen Anzünder (70) und einen Sockel (30), wobei der Sockel (30) durch eine einzige Kunststoffeinspritzung gebildet ist, derart dass der Anzünder (70) in den Sockel (30) eingebettet und der Sockel (30) an das Halteelement (16) angespritzt ist, wobei eine Membran (36) vorgesehen ist, welche eine innere erste Öffnung (33) des Halteelements (16) verschließt, wobei das Halteelement (16) als langgestreckter, hülsenförmiger Hohlkörper mit der ersten Öffnung (33), die im Inneren des Gasgenerators (10) liegt, und einer dazu stirnseitig gegenüberliegenden zweiten Öffnung (34) ausgebildet ist, wobei das Halteelement (16) und die Membran (36) aus Metall gebildet sind, **dadurch gekennzeichnet, dass**
das Halteelement (16) im Bereich seiner ersten Öffnung (33) einen ersten Fortsatz (24) hat, welcher den Anzünder (70) bezüglich seiner Längserstreckung überragt, wobei die Membran (34) als eine planare Scheibe ausgebildet ist und mit dem Halteelement (16) stoffschlüssig durch eine erste Verbindung (42) verbunden ist, derart, dass die Membran (36) die innere erste Öffnung (33) des Halteelements (16) wasserdicht und gasdicht verschließt.

2. Gasgenerator (10) nach Anspruch 1,
**dadurch gekennzeichnet, dass**
das Halteelement (16) entlang seiner äußeren und inneren Kontur frei von einem Hinterschnitt ist.

3. Gasgenerator (10) nach Anspruch 1 oder 2, **dadurch gekennzeichnet, dass** sich der Sockel (30) ausnahmslos entlang einer Innenwand (27) des Halteelements (16) erstreckt.

4. Gasgenerator (10) nach einem der voranstehenden Ansprüche,
**dadurch gekennzeichnet, dass**
ein Bereich des ersten Fortsatzes (24) als ein sich nach radial außen hin verbreiternder Konusbereich (22) ausgebildet ist.

5. Gasgenerator (10) nach einem der voranstehenden Ansprüche, **dadurch gekennzeichnet, dass** die Anzündeinheit (80) als vormontierte Baugruppe fertigbar ist.

6. Gasgenerator (10) nach einem der voranstehenden Ansprüche,
**dadurch gekennzeichnet, dass**
das Halteelement (16) an seiner Innenwand (27) eine Einschnürung (32) hat, durch die sich der Anzünder (70) zumindest bereichsweise erstreckt, wobei die Einschnürung (32) im Längsschnitt betrachtet zu einer Mittelachse (Z) des Halteelements (16) hin bogenförmig, insbesondere in Form eines Kreissegments, ausgebildet ist, insbesondere derart dass sich entlang der Innenwand (27) eine konkave-konvexe-konkave Kontur ausbildet, wobei vorzugsweise das Halteelement (16) frei von einem geometrisch ausgeformten Verdrehschutz für den Sockel (30) ausgebildet ist.

7. Gasgenerator (10) nach Anspruch 6,
**dadurch gekennzeichnet, dass**
sich an die Einschnürung (32) beidseitig Bereiche der Innenwand (27) anschließen, welche im Wesentlichen parallel zur Mittelachse (Z) des Halteelements (32) ausgebildet sind, und ein erster, zweiter und dritter Krümmungsradius (21, 23, 25) der Innenwand (27) die Form der Einschnürung (32) bestimmen, wobei der zweite Krümmungsradius (23) die engste Stelle der Einschnürung (32) definiert und insbesondere die Krümmungsradien (21, 23, 25) jeweils denselben Wert, vorzugsweise von 2,0 mm, aufweisen.

8. Gasgenerator (10) nach einem der voranstehenden Ansprüche,
**dadurch gekennzeichnet, dass**
das Halteelement (16) einen ersten Wulst (18) hat, der sich in Form der/einer Einschnürung (32) auf der Innenseite des Halteelements (16) nach radial innen erstreckt, wobei sich längsaxial beabstandet von dem ersten Wulst (18) ein zweiter Wulst (20) auf der Außenseite des Halteelements (16) nach radial außen erstreckt, wobei der erste Wulst (18) einen Anschlag für den Sockel (30) ausbildet.

9. Gasgenerator (10) nach einem der Ansprüche 1 bis 7, **dadurch gekennzeichnet, dass** das Halteelement (16) einen ersten Wulst (18) hat, der sich in Form der/einer Einschnürung (32) auf der Innenseite des Halteelements (16) nach radial innen erstreckt, wobei sich längsaxial beabstandet von dem ersten Wulst (18) ein zweiter Wulst (20) auf der Außenseite des Halteelements (16) nach radial außen erstreckt, wobei der zweite Wulst (20) ein Anschlag gegenüber einem Verschlussboden (14) und/oder einer Anzündkappe (53) ist.

10. Gasgenerator (10) nach einem der voranstehenden Ansprüche,
**dadurch gekennzeichnet, dass**
ein topfförmiger Diffusor (12) mit zweiten Durchströmöffnungen (68) von einem/dem Verschlussboden (14) verschlossen ist, wobei ein Durchlass (90) des Verschlussbodens (14) von der Anzündeinheit (80), insbesondere durch ein Einschweißen des Halteelements (16), verschlossen ist und vorzugsweise der Diffusor (12) und der Verschlussboden (14) mit der Anzündeinheit (80) einen Großteil des Außengehäuses des Gasgenerators (10) bilden.

11. Gasgenerator (10) nach Anspruch 10,
**dadurch gekennzeichnet, dass**
eine/die Anzündkappe (53) mit ersten Durchströmöffnungen (54) im Inneren des Gasgenerators (10) verschiebbar an der Außenseite des Halteelements (16) positioniert ist, derart dass nach einer Aktivierung des Gasgenerators (10) ein Bereich der Außenseite des Halteelements (16) als eine Führung (17) für eine Verschiebung der Anzündkappe (53) in einer Verschieberichtung (V) dient.

12. Gasgenerator (10) nach Anspruch 11,
**dadurch gekennzeichnet, dass**
im Inneren der Anzündkappe (53) eine Anzündkammer (50) mit einem ersten Treibstoff (52) ausgebildet ist, wobei insbesondere zwischen dem/einen Konusbereich (22) des Halteelements (16) und der Anzündkappe (53) ein sich zu den ersten Durchströmöffnungen (54) der Anzündkappe (53) hin verjüngender Bereich der Anzündkammer (50) ausgebildet ist.

13. Gasgenerator (10) nach einem der voranstehenden Ansprüche 10 bis 12, **dadurch gekennzeichnet, dass**
eine ringförmige Brennkammer (60) mit einem zweiten Treibstoff (62) die/eine Anzündkappe (53) umgebend ausgebildet ist, wobei die Brennkammer (60) von dem Diffusor (12) und dem Verschlussboden (14) gegenüber der Umgebung des Gasgenerators (10) abgegrenzt ist und vorzugsweise ein Filter (64) und/oder ein Volumenausgleich (66) in der Brennkammer (60) aufgenommen sind.

14. Gassackmodul mit einem Gasgenerator (10), einem von dem Gasgenerator (10) aufblasbaren Gassack und einer Befestigungseinrichtung zur Anbringung des Gassackmoduls an einem Fahrzeug,
**dadurch gekennzeichnet, dass**
der Gasgenerator (10) nach zumindest einem der Ansprüche 1 bis 13 ausgebildet ist.

15. Fahrzeugsicherheitssystem, insbesondere zum Schutz einer Person, beispielsweise eines Fahrzeuginsassen oder Passanten, mit einem Gasgenerator (10), insbesondere als Teil eines Gassackmoduls oder als Teil eines Sicherheitsgurtsystems oder als Teil eines Aktuatorbauteils, und einer elektronischen Steuereinheit, mittels der der Gasgenerator (10) bei Vorliegen einer Auslösesituation aktivierbar ist,
**dadurch gekennzeichnet, dass**
der Gasgenerator (10) nach zumindest einem der Ansprüche 1 bis 13 ausgebildet ist.

## Claims

1. A gas generator (10), for a vehicle safety system, comprising an ignition unit (80) including a holding element (16), an igniter (70) and a base (30), the base (30) being formed by one single plastic injection molding so that the igniter (70) is embedded in the base (30) and the base (30) is injection-molded to the holding element (16), wherein a membrane (36) is provided which seals an inner first opening (33) of the holding element (16), wherein the holding element (16) is configured as an elongate sleeve-shaped hollow body comprising the first opening (33) which is located inside the gas generator (10), and a second opening (34) opposite thereto on the front side, wherein the holding element (16) and the membrane (36) are made from metal
**characterized in that**
the holding element (16) has, in the area of its first opening (33), a first lengthening (24) which projects from the igniter (70) in terms of its longitudinal extension, wherein the membrane (36) is in the form of a planar disk and is materially connected to the holding element (16) by a first joint (42) such, that the Membrane (36) seals the inner first opening (33) in a water-tight and gastight manner.

2. The gas generator (10) according to claim 1
**characterized in that,**
the holding element (16) is free from an undercut along its outer and inner contours.

3. The gas generator (10) according to claim 1 or 2
**characterized in that,**
the base (30) extends invariably along an inner wall (27) of the holding element (16).

4. The gas generator (10) according to any one of the preceding claims, **characterized in that**
a portion of the first lengthening (24) is configured as a radially outwardly widening conical area (22).

5. The gas generator (10) according to any one of the preceding claims,
**characterized in that**
the ignition unit (80) can be fabricated as a pre-assembled group.

6. The gas generator (10) according to any one of the preceding claims,
**characterized in that**
on its inner wall (27) the holding element (16) has a constriction (32) through which the igniter (70) extends at least in portions, wherein, when viewed in the longitudinal section, the constriction (32) is curved toward a central axis (Z) of the holding element (16), specifically in the form of a circle segment, in particular such that a concave-convex-concave contour forms along the inner wall (27), wherein preferably the holding element (16) is free from a geometrically formed anti-twist protection for the base (30).

7. The gas generator (10) according to claim 6,
**characterized in that**
areas of the inner wall (27) which are formed substantially in parallel to the central axis (Z) of the holding element (16) are connected on both sides of the constriction (32), and first, second and third radii of curvature (21, 23, 25) of the inner wall (27) determine the shape of the constriction (32), the second radius of curvature (23) defining the narrowest point of the constriction (32) and in particular each of the radii of curvature (21, 23, 25) has the same value, preferably of 2.00 mm.

8. The gas generator (10) according to any one of the preceding claims,
**characterized in that**
the holding element (16) has a first bead (18) extending radially inwardly in the form of the/a constriction (32) on the inside of the holding element (16), wherein, spaced apart from the first bead (18) along the longitudinal axis, a second bead (20) extends radially outwardly on the outside of the holding element (16), wherein the first bead (18) forms a stop for the base (30).

9. The gas generator (10) according to any one of the preceding claims 1 to 7, **characterized in that**
the holding element (16) has a first bead (18) extending radially inwardly in the form of the/a constriction (32) on the inside of the holding element (16), wherein, spaced apart from the first bead (18) along the longitudinal axis, a second bead (20) extends radially outwardly on the outside of the holding element (16), wherein the second bead (20) forms a stop against a closure bottom (14) and/or an ignition cap (53).

10. The gas generator (10) according to any one of the preceding claims,
**characterized in that**
a cup-shaped diffusor (12) having second flow orifices (68) is closed by a/the closure bottom (14), wherein a passage (90) of the closure bottom (14) is closed by the ignition unit (80), in particular by welding the holding element (16), and preferably the diffusor (12) and the closure bottom (14) with the ignition unit (80) form a major part of the outer housing of10the gas generator (10).

11. The gas generator (10) according to claim 10,
**characterized in that**
a/the ignition cap (53) having first flow orifices (54) inside the gas generator (10) is movably positioned on the outside of the holding element (16) such that, after activating the gas generator (10), an area of the outside of the holding element (16) serves as a guide (17) for shifting the ignition cap (53) in a shifting direction (V).

12. The gas generator (10) according to claim 11,
**characterized in that**
inside the ignition cap (53) an ignition chamber (50) with a first propellant (52) is formed, wherein particularly between the/a conical area (22) of the holding element (16) and the ignition cap (53) an area of the ignition chamber (50) tapering toward the first flow orifices (54) of the ignition cap (53) is formed.

13. The gas generator (10) according to any one of the preceding claims 10 to 12, **characterized in that**
an annular combustion chamber (60) with a second propellant (62) is formed to surround the/an ignition cap (53), wherein the combustion chamber (60) is delimited by the diffusor (12) and the closure bottom (14) against the environment of the gas generator (10) and preferably a filter (64) and/or a volume compensating means (66) are accommodated in the combustion chamber (60).

14. An airbag module comprising a gas generator (10), an airbag inflatable by the gas generator (10) and a fastening means for attaching the airbag module to a vehicle,
**characterized in that**
the gas generator (10) is configured according to at least one of the claims 1 to 13.

15. A vehicle safety system, particularly for the protection of a person such as a vehicle occupant or a pedestrian, comprising a gas generator (10), particularly as part of an airbag module or as part of a seat belt system or as part of an actuator component, and comprising an electronic control unit by means of which the gas generator (10) can be activated when a situation of release is given,
**characterized in that**
the gas generator (10) is configured according to at least one of the claims 1 to 13.

## Revendications

1. Générateur de gaz (10) pour un système de sécurité de véhicule, avec une unité d'allumage (80), comprenant un élément de maintien (16), un allumeur (70) et un socle (30), pour lequel le socle (30) est formé par une seule injection de matière plastique, de telle sorte que l'allumeur (70) est noyé dans le socle (30) et que le socle (30) est injecté sur l'élément de maintien (16), pour lequel une membrane (36) est prévue, laquelle ferme une première ouverture (33) intérieure de l'élément de maintien (16), pour lequel l'élément de maintien (16) est réalisé sous la forme d'un corps creux allongé en forme de douille avec la première ouverture (33) qui se trouve à l'intérieur du générateur de gaz (10) et une deuxième ouverture (34) opposée à celle-ci du côté frontal, pour lequel l'élément de maintien (16) et la membrane (36) sont formés en métal,
**caractérisé en ce que**
l'élément de maintien (16) possède, dans la zone de sa première ouverture (33), un premier prolongement (24) lequel dépasse l'allumeur (70) par rapport à son extension longitudinale, pour lequel la membrane (34) est réalisée sous la forme d'un disque plan et est reliée à l'élément de maintien (16) par une première liaison (42), de telle sorte que la membrane (36) ferme la première ouverture intérieure (33) de l'élément de maintien (16) de manière étanche à l'eau et au gaz.

2. Générateur de gaz (10) selon la revendication 1,
**caractérisé en ce que**
l'élément de maintien (16) est exempt de contre-dépouille le long de son contour extérieur et intérieur.

3. Générateur de gaz (10) selon la revendication 1 ou 2, **caractérisé en ce que** le socle (30) s'étend sans interruption le long d'une paroi interne (27) de l'élément de maintien (16).

4. Générateur de gaz (10) selon l'une quelconque des revendications précédentes,
**caractérisé en ce que**
une zone du premier prolongement (24) est conçue comme une zone conique (22) s'élargissant radialement vers l'extérieur.

5. Générateur de gaz (10) selon l'une des revendications précédentes, **caractérisé en ce que** l'unité d'allumage (80) peut être prête à l'emploi sous forme de module préassemblé.

6. Générateur de gaz (10) selon l'une des revendications précédentes, **caractérisé en ce que**
l'élément de retenue (16) présente sur sa paroi intérieure (27) un rétrécissement (32), à travers lequel l'allumeur (70) s'étend au moins par zones, pour lequel le rétrécissement (32), vu en coupe longitudinale, est réalisé en forme d'arc, en particulier sous la forme d'un segment de cercle, vers un axe central (Z) de l'élément de maintien (16), en particulier sous la forme d'un segment de cercle, notamment de telle sorte qu'un contour concave-convexe-concave se forme le long de la paroi intérieure (27), pour lequel l'élément de maintien (16) est de préférence exempt d'une protection contre la torsion de forme géométrique pour le socle (30).

7. Générateur de gaz (10) selon la revendication 6,
**caractérisé en ce que**
des zones des deux côtés de la paroi intérieure (27) se raccordent au rétrécissement (32), lesquelles sont formées essentiellement parallèlement à l'axe central (Z) de l'élément de maintien (32), et un premier, un deuxième et un troisième rayon de courbure (21, 23, 25) de la paroi intérieure (27) déterminent la forme du rétrécissement (32), pour lequel le deuxième rayon de courbure (23) définit l'endroit le plus étroit du rétrécissement (32) et, en particulier, les rayons de courbure (21, 23, 25) possèdent chacun la même valeur, de préférence de 2,0 mm.

8. Générateur de gaz (10) selon l'une quelconque des revendications précédentes,
**caractérisé en ce que**
l'élément de maintien (16) a un premier bourrelet (18), lequel s'étend radialement vers l'intérieur sous la forme du/d'un rétrécissement (32) sur le côté intérieur de l'élément de maintien (16), pour lequel un deuxième bourrelet (20) s'étend radialement vers l'extérieur sur le côté extérieur de l'élément de retenue (16) à distance du premier bourrelet (18) dans le sens longitudinal, pour lequel le premier bourrelet (18) forme une butée pour le socle (30).

9. Générateur de gaz (10) selon l'une quelconque des revendications 1 à 7, **caractérisé en ce que** l'élément de maintien (16) comporte un premier bourrelet (18), lequel s'étend radialement vers l'intérieur sous la forme du/d'un rétrécissement (32) sur le côté intérieur de l'élément de maintien (16), pour lequel un deuxième bourrelet (20) s'étend radialement vers l'extérieur sur le côté extérieur de l'élément de maintien (16), à distance du premier bourrelet (18) dans le sens longitudinal, pour lequel le deuxième bourrelet (20) forme une butée par rapport à un fond de fermeture (14) et/ou un capuchon d'allumage (53).

10. Générateur de gaz (10) selon l'une quelconque des revendications précédentes,
**caractérisé en ce que**
un diffuseur (12) en forme de pot avec deux ouvertures d'écoulement (68) est fermé par un/des fond(s) de fermeture (14),pour lequel un passage (90) du fond de fermeture (14) est fermé par l'unité d'allumage (80), en particulier par un soudage de l'élément de maintien (16), et de préférence le diffuseur (12) et le fond de fermeture (14) avec l'unité d'allumage (80) forment une grande partie du boîtier extérieur du générateur de gaz (10).

11. Générateur de gaz (10) selon la revendication 10,
**caractérisé en ce que**
un/le capuchon(s) d'allumage (53) avec des premières ouvertures d'écoulement (54) à l'intérieur du générateur de gaz (10) est positionné de manière coulissante sur le côté extérieur de l'élément de maintien (16), de telle sorte qu'après une activation du générateur de gaz (10), une zone du côté extérieur de l'élément de maintien (16) sert de guide (17) pour un déplacement du capuchon d'allumage (53) dans une direction de déplacement (V).

12. Générateur de gaz (10) selon la revendication 11,
**caractérisé en ce que**
une chambre d'allumage (50) contenant un premier propergol (52) est formée à l'intérieur du capuchon d'allumage (53), pour lequel une zone de la chambre d'allumage (50) se rétrécissant en direction des premières ouvertures d'écoulement (54) du capuchon d'allumage (53) est notamment formée entre la/une zone conique (22) de l'élément de maintien (16) et le capuchon d'allumage (53).

13. Générateur de gaz (10) selon l'une quelconque des revendications 10 à 12 ci-dessus,
**caractérisé en ce que**
une chambre de combustion annulaire (60) est formée avec un deuxième propergol (62) entourant le/un capuchon d'allumage (53), pour lequel la chambre de combustion (60) est délimitée par le diffuseur (12) et le fond de fermeture (14) par rapport aux limites du générateur de gaz (10) et de préférence un filtre (64) et/ou un compensateur de volume (66) sontt logés dans la chambre de combustion (60).

14. Module airbag comprenant un générateur de gaz (10), un coussin gonflable pouvant être gonflé par le générateur de gaz (10) et un dispositif de fixation pour monter le module airbag sur un véhicule, **caractérisé en ce que**
le générateur de gaz (10) est réalisé selon au moins l'une des revendications 1 à 13.

15. Système de sécurité pour véhicule, en particulier pour la protection d'une personne, par exemple un passager du véhicule ou un passant, comprenant un générateur de gaz (10), en particulier en tant que partie d'un module airbag ou en tant que partie d'un système de ceinture de sécurité ou en tant que partie d'un composant d'actionneur, et une unité de commande électronique, au moyen de laquelle le générateur de gaz (10) peut être activé en présence d'une situation de déclenchement, **caractérisé en ce que**
le générateur de gaz (10) est conçu selon au moins l'une des revendications 1 à 13.
